# NOUVEAU FASCICULE DE BREVET EUROPEEN

(11) **EP 0 500 432 B2**
(45) Date de publication et mention de la décision concernant l'opposition: **19.01.2000**
(45) Mention de la délivrance du brevet: 13.07.1994
(21) Numéro de dépôt: 92400403.9
(22) Date de dépôt: 14.02.1992
(51) Int. Cl.: F16F 13/00

(54) **Perfectionnements apportés aux dispositifs antivibratoires hydrauliques**
Verbesserungen an hydraulischen Antischwingungsvorrichtungen
Improvements to hydraulic antivibration devices

(30) Priorité: 18.02.1991 FR 9101899
(43) Date de publication de la demande: 26.08.1992
(73) Titulaire: HUTCHINSON, 75008 Paris (FR)
(72) Inventeur: Bretaudeau, Jean-Pierre, F-28200 Chateaudun (FR); Gregoire, Daniel, F-28200 Chateaudun (FR)
(74) Mandataire: Burbaud, Eric

(56) Documents cités:
- EP-A- 0 115 174
- EP-A- 0 149 081
- DE-A- 3 342 300
- DE-A- 3 629 807
- DE-A- 3 643 556
- DE-A- 3 805 761
- DE-A- 3 808 996
- DE-A- 3 827 326
- DE-U- 8 119 912
- FR-A- 2 555 272
- "Automobilindustrie" 6/88, pages 657 à 667
- "Elastomere Federung, Elastische Lagerungen : Grundlage ingenieurmässiger Berechnung und konstruktion" Verlag Wilhelm Ernst & Sohn, 1982, pages 52 à 60,

## Description

L'invention concerne les dispositifs antivibratoires hydrauliques destinés à être interposés aux fins d'amortissement et de liaison, voire de support, entre deux éléments rigides tels qu'un châssis de véhicule et que le moteur de ce véhicule.

Elle concerne plus particulièrement, parmi ces dispositifs, ceux qui comportent :
- une armature rigide annulaire d'axe Z vertical ou sensiblement vertical et un plot rigide coaxial à cette armature, solidarisables respectivement avec les deux éléments rigides à réunir,
- une paroi annulaire en élastomère d'axe Z résistant à la compression axiale, interposée entre l'armature et le plot,
- une membrane flexible et étanche portée par l'armature et délimitant une enceinte avec celle-ci, le plot et la paroi annulaire,
- une cloison intermédiaire comprenant au moins une portion annulaire rigide, portée par l'armature et divisant l'intérieur de l'enceinte en deux chambres, l'une de travail du côté de la paroi dit côté inférieur, et l'autre de compensation,
- un passage étranglé faisant communiquer en permanence les deux chambres entre elles,
- et une masse de liquide remplissant les deux chambres et le passage étranglé.

Comme on le sait, avec un tel dispositif, l'application sur l'une des armatures, selon la direction Z, d'oscillations de relativement grande amplitude (généralement supérieure à 0,5 mm) et de relativement basse fréquence (généralement de l'ordre de 5 à 20 Hz) ont pour effet de refouler le liquide de l'une des deux chambres dans l'autre et inversement à travers le passage étranglé, avec mise en résonance de la masse liquide ainsi refoulée lorsque la fréquence desdites oscillations atteint une valeur prédéterminée qui est fonction du rapport entre la longueur axiale et la section droite du passage étranglé, cette mise en résonance assurant un excellent amortissement des oscillations concernées.

L'invention vise plus particulièrement encore, parmi les dispositifs antivibratoires du genre ci-dessus, ceux du type "suspendu" pour lesquels le plot délimitant en partie l'intérieur de la chambre de travail constitue la tête d'une tige de suspension elle-même disposée coaxialement à l'armature annulaire, à l'intérieur de la portion inférieure de cette armature, la paroi annulaire, évasée vers le bas et de préférence tronconique, rentrant alors vers le haut à l'intérieur de la portion annulaire inférieure de la chambre de travail et ladite paroi annulaire étant composée de deux portions adhérées radialement de part et d'autre d'une même armature annulaire intermédiaire rigide, et le dispositif comportant en outre un piston qui plonge radialement dans la chambre de travail A et qui est couplé axialement à la tige de suspension.

Les supports de ce type, comme divulgués par M. Hofmann (Automobil - Industrie, N°6/88, p 657 à 659), permettent de suspendre un ensemble rigide, tel qu'un moteur, disposé au-dessous d'eux et accroché à leurs tiges tout en faisant travailler à la compression leurs parois annulaires en élastomère.

Il est à noter que, lesdites parois annulaires étant déformables aussi bien radialement qu'axialement, les supports considérés peuvent transmettre des vibrations du plot à l'armature ou inversement, en engendrant des effets hydrauliques aussi bien selon des directions radiales que selon la direction de l'axe Z.

En général les transmissions de vibrations que l'on désire contrôler -et donc l'amortissement que l'on recherche- concernent essentiellement la direction axiale.

Les oscillations ou vibrations transmises radialement sont négligeables et ne justifient pas un traitement particulier.

C'est notamment le cas si la fréquence de ces vibrations demeure inférieure à un seuil relativement bas, qui est par exemple de 165 Hz, valeur correspondant au deuxième harmonique, de la vitesse de rotation maximum de 5000 tours/minute pour les arbres de certains moteurs Diesel, c'est-à-dire à la fréquence des explosions d'un tel moteur.

Si, toutes choses égales par ailleurs, le moteur considéré est remplacé par un moteur à essence dont la vitesse maximum de rotation passe à 7000 tours/minute, ce qui correspond à des vibrations dont la fréquence est de 230 Hz, il arrive que les composantes radiales de ces vibrations mettent en jeu des phénomènes de résonance qui sont insuffisamment filtrés et engendrent des bruits désagréables.

Il convient donc de prévoir des moyens spéciaux pour réduire le niveau de ces bruits.

C'est là le principal but de la présente invention.

Pour atteindre un tel but, un support antivibratoire hydraulique du genre en question est essentiellement caractérisé en ce que l'armature intermédiaire est prolongée extérieurement par un anneau d'axe Z qui constitue le piston, celle des deux portions de la paroi annulaire, qui est comprise entre la tête de la tige et l'armature intermédiaire, portion dite "première portion" ci-après, étant évidée de part et d'autre de la tête de la tige de suspension selon au moins une direction radiale, ladite première portion, présentant une grande rigidité axiale et une faible rigidité selon au moins ladite direction radiale X, pour découpler le piston par rapport à la tige de suspension selon au moins ladite direction radiale X tout en maintenant le piston couplé à la tige de suspension dans la direction axiale Z.

Grâce à cette dernière caractéristique, l'effet hydraulique, parfois appelé "effet piston", engendré par les déplacements de l'anneau dans la chambre de travail est "découplé" de la direction axiale par rapport à ladite direction radiale.

En d'autres termes, la transmission des composantes radiales ci-dessus définies entre les deux éléments rigides est atténuée, voire annulée, du fait que les vibrations de la tête de la tige dans la direction radiale considérée ne sont pas directement transmises à l'anneau.

Dans des modes de réalisation particuliers, on a recours en outre à l'une et/ou à l'autre des dispositions suivantes :
- la première portion de la paroi annulaire en élastomère est évidée par des alvéoles diamétralement opposés selon la direction radiale considérée,
- l'armature intermédiaire se présente sous la forme d'une coupelle métallique sans fond,
- le grand bord superieur de la coupelle métallique est prolongé par des pattes et l'anneau comprend une rondelle dont le bord intérieur est évidé par des encoches recevant les racines des pattes de la coupelle, pattes qui sont rabattues radialement sur ladite rondelle,
- la périphérie de la rondelle est revêtue par un bourrelet annulaire en matériau élastomère.

L'invention comprend, mises à part ces dispositions principales, certaines autres dispositions qui s'utilisent de préférence en même temps et dont il sera plus explicitement question ci-après.

Dans ce qui suit, l'on va décrire quelques modes de réalisation préférés de l'invention en se référant au dessin ci-annexé d'une manière bien entendu non limitative.

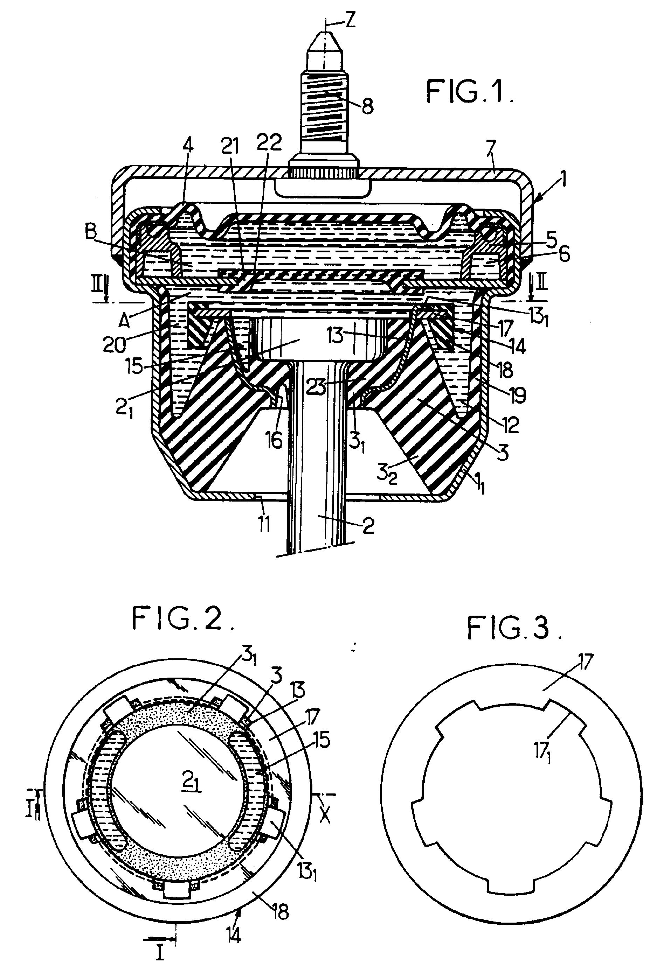

La figure 1, de ce dessin, montre en coupe axiale un support antivibratoire hydraulique établi conformément à l'invention.

La coupe 2 est une coupe transversale partielle de ce support selon II-II, figure 1.

La figure 3 montre une rondelle constitutive dudit support.

Le support antivibratoire considéré comprend :
- une armature annulaire rigide 1 d'axe vertical Z et une tige centrale coaxiale 2 à tête élargie 2₁ destinées à être fixées respectivement sur deux éléments rigides que l'on désire monter l'un sur l'autre avec amortissement de leurs oscillations mutuelles, éléments faisant partie par exemple, respectivement, d'un châssis de véhicule et d'un moteur à combustion interne compris par ce véhicule,
- une paroi tronconique en élastomère 3 interposée verticalement entre l'armature 1 et la tête 2₁,
- une membrane ou soufflet flexible et étanche 4 monté de façon étanche sur l'armature 2 de manière à former une enceinte avec elle, la paroi 3 et la tête 2₁,
- une cloison intermédiaire comprenant au moins une portion annulaire rigide et 5 portée par l'armature 1 et divisant l'intérieur de l'enceinte ci-dessus en deux chambres, l'une A, "de travail", du côté de la paroi 3 et l'autre B, "de compensation",
- et un passage étranglé 6 évidé dans la cloison 5 et reliant en permanence les deux chambres A et B.

Un liquide d'amortissement L tel que de l'eau additionnée d'antigel remplit les chambres A et B ainsi que le passage 6.

L'armature annulaire 1 se présente ici sous la forme d'un manchon cylindrique dont l'extrémité supérieure constitue un capot ou couvercle de protection 7 pour la membrane et porte un goujon 8 en attente s'étendant vers le haut.

La base 1₁ de ce manchon présente une forme tronconique rétrécie vers le bas et est prolongée inférieurement par un rebord transversal rentrant évidé par un trou central 11, trou traversé avec jeu par la tige 2, mais trop petit pour livrer passage à la tête 2₁ de cette tige.

Cette mesure constitue une sécurité, la butée éventuelle de la tête 2₁ contre le bord du trou 11, après écrasement ou destruction de la paroi tronconique 3, rendant impossible l'extraction de la tige 2 vers le bas.

Cette paroi tronconique 3 -appelée "cône" dans ce qui suit- relie la face interne de la base tronconique 1₁ de l'armature 1 à la face externe de la tête 2₁.

En d'autres termes, ce cône 3 présente une forme rentrante à l'intérieur du support, convergeant vers le centre de celui-ci.

L'ensemble rentrant ou "nez" formé par le cône 3 et la tête 2₁ est alors entouré par la base annulaire de la chambre de travail A, base qui se présente sous la forme d'une auge annulaire 12.

Dans les modes de réalisation habituels, le cône 3 est constitué d'un seul bloc en élastomère et les vibrations imposées à la tige 2 sont essentiellement transmises au volume de liquide contenu dans l'auge 12 par la portion, dudit cône 3, qui entoure la tête 2₁ de cette tige.

Si la composante axiale de ces vibrations est efficacement neutralisée par le phénomène de résonance signalé ci-dessus au niveau du passage étranglé 6, il n'en est pas de même de leurs composantes radiales.

La même observation peut être faite pour les modes de réalisation, également connus, dans lesquels un disque rigide est solidarisé avec la tête de la tige, disque dont le pourtour plonge radialement dans la chambre de travail A.

Comme dit plus haut, l'expérience montre que, dans certaines circonstances, l'absence de neutralisation des susdites composantes radiales peut donner lieu à des phénomènes de résonance parasites générateurs de bruits désagréables.

Pour supprimer ces phénomènes ou tout au moins les limiter à un degré pour lequel ils ne provoquent pas de gêne, selon l'invention, on constitue le cône 3 en deux morceaux séparés l'un de l'autre par une armature annulaire rigide 13 sur laquelle ils sont adhérés tous les deux, le morceau le plus proche de l'axe présentant une bonne rigidité axiale et une faible rigidité selon au moins une direction radiale X (figure 2) et on prolonge radialement vers l'extérieur ladite armature par un anneau 14 plongeant dans la chambre de travail A.

Dans ces conditions, cet anneau 14, qui joue un rôle de "piston" lorqu'il se déplace dans le liquide de la chambre A, demeure "couplé" à la tige 2 pour ce qui concerne la composante axiale des vibrations appliquées sur cette tige et il est au contraire "découplé" de ladite tige pour tout ce qui concerne la composante radiale ci-dessus, étant en quelque sorte monté flottant sur ladite tige selon la direction radiale X.

L'expérience montre qu'alors les vibrations radiales induites sur ledit piston par les composantes radiales des vibrations appliquées sur la tige ont pour effet de neutraliser la transmission de ces composantes de la tige à l'armature externe 1, ce qui supprime les bruits désagréables correspondants.

Dans le mode de réalisation illustré sur la figure 1, les deux portions du cône 3 qui sont séparées par l'armature intermédiaire 13 sont désignées respectivement par la référence 3₁ pour la portion de plus petit diamètre adhérée sur la tête 2₁ et par la référence 3₂ pour l'autre portion, adhérée sur la jupe tronconique 1₁ de l'armature externe 1.

Tout se passe en somme comme si l'armature intermédiaire 13-14 formant piston était reliée à la tige centrale 2 par un "plot" annulaire 3₁ peu déformable axialement, mais très déformable par "cisaillement" selon la direction X.

Dans la réalisation considérée, l'armature intermédiaire 13 se présente sous la forme d'une coupelle métallique sans fond dont le profil est semblable à celui de la tête 2₁, mais bien entendu beaucoup plus grand que ce dernier profil.

Il résulte de la similitude entre ces deux profils que la portion 3₁ du cône 3 se présente elle-même sous la forme d'une coupelle épaisse sans fond entourant la tête 2₁ et l'extrémité, de la tige 2, raccordée à cette tête, l'épaisseur de cette coupelle épaisse étant sensiblement identique en tous ses points.

Pour réduire la rigidité de cette portion 3₁ selon la direction radiale X, on évide ladite portion 3₁ par des alvéoles 15,16 qui sont diamétralement opposés deux à deux selon la direction X et qui sont évidés respectivement dans les deux faces frontales transversales de cette portion 3₁.

L'anneau 14, quant à lui, est avantageusement constitué par une rondelle métallique 17 dont le bord intérieur est échancré par des encoches 17₁ (figure 3) propres à recevoir jointivement les racines de pattes 13₁ prolongeant vers le haut la coupelle 13 : le rabattement de ces pattes 13₁ radialement vers l'extérieur permet d'assurer un assemblage de la rondelle 17 sur la coupelle 13 par un effet de sertissage.

La périphérie de la rondelle 17 est avantageusement revêtue par un bourrelet annulaire 18 constitué en un matériau élastomère, ce qui permet d'établir une butée progressive entre ledit bourrelet et les plages en regard contre lesquelles il peut venir porter lors des fortes déformations du support.

Dans le même but d'éviter un contact bruyant entre l'anneau 14 et la plage en regard de l'armature tubulaire externe 1, on tapisse avantageusement la face intérieure, de cette armature, qui délimite extérieurement la chambre A, par une couche de caoutchouc 19 venue de moulage avec le cône 3.

La face latérale extérieure du bourrelet 18 est de préférence cylindrique de révolution, comme illustré, ce qui définit entre celui-ci et la plage cylindrique en regard de la couche 19 un passage annulaire étranglé 20 s'étendant selon une direction parallèle à l'axe Z, avec une section droite sensiblement constante sur toute sa hauteur.

Comme il est connu, la présence d'un tel passage 20 permet d'exploiter aux fins d'amortissement ou filtration un second "effet colonne" basé sur la résonance du liquide contenu dans ledit passage, effet du même type que le premier "effet colonne" basé sur l'existence du passage étranglé 6 : pour un dimensionnement approprié des cotes dudit passage 20, on peut centrer le second effet en question sur une seconde valeur de la fréquence des oscillations à filtrer ou amortir.

D'une façon également connue en soi, on prévoit au centre de la cloison intermédiaire 5 une ouverture qui est obturée par une membrane déformable 21 associée à des moyens, tels qu'une toile 22 noyée dans ladite membrane, propres à limiter l'amplitude de ses débattements.

Les vibrations de ladite membrane 22 permettent de filtrer certaines vibrations, de fréquence relativement élevée et d'amplitude relativement faible, qui sont appliquées à la tige 2 par le moteur qui est suspendu.

En suite de quoi, et quel que soit le mode de réalisation adopté, on obtient finalement un dispositif antivibratoire hydraulique dont la constitution et le fonctionnement résultent suffisamment de ce qui précède.

Ce dispositif présente un certain nombre d'avantages par rapport à ceux antérieurement connus, notamment en ce qui concerne la réduction des bruits engendrés par les composantes, selon la direction radiale X, des vibrations de relativement haute fréquence (notamment comprise entre 150 et 400 Hz) dont la tige 2 est le siège par réduction automatique de la raideur dynamique correspondante du dispositif vis-à-vis desdites composantes.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes, notamment celles où la portion de petit diamètre 3₁, du cône 3, qui est adhérée sur la face intérieure de l'armature intermédiaire 13 -portion jouant le rôle ci-dessus expliqué de "plot de découplage radial travaillant au cisaillement"-, présenterait sensiblement une même rigidité selon toutes les directions radiales, rigidité dont la valeur relativement faible serait obtenue par exemple par le dégagement d'alvéoles multiples, dans ladite portion 3₁, tout autour de l'axe Z, le dessin général de ladite portion 3₁ étant toutefois congru de façon telle que la valeur de la rigidité axiale de cette portion demeure relativement élevée : cette dernière caractéristique peut notamment être assurée en faisant comprendre à la portion 3₁ une pastille annulaire pleine 23 interposée axialement entre deux portées annulaires planes comprises respectivement par la tête 2₁ et par la coupelle 13, ainsi que visible sur la figure 1.

## Revendications

1. Dispositif antivibratoire hydraulique destiné à être interposé entre deux éléments rigides et comportant :
- une armature rigide annulaire (1) d'axe Z vertical ou sensiblement vertical et un plot rigide (2₁) coxial à cette armature, solidarisables respectivement avec les deux élements rigides,
- une paroi annulaire en élastomère (3) d'axe Z résistant à la compression axiale, interposée entre l'armature et le plot,
- une membrane flexible et étanche (4) portée par l'armature et délimitant une enceinte avec celle-ci, le plot et la paroi annulaire,
- une cloison intermédiaire (5) comprenant au moins une portion annulaire rigide portée par l'armature et divisant l'intérieur de l'enceinte en deux chambres, l'une de travail (A) du côté de la paroi annulaire (3), dit côté inférieur, et l'autre de compensation (B),
- un passage étranglé (6) faisant communiquer en permanence les deux chambres entre elles,
- et une masse de liquide remplissant les deux chambres et le passage étranglé,
- le plot (2₁) délimitant en partie l'intérieur de la chambre de travail (A) et constituant la tête d'une tige de suspension (2) elle-même disposée coaxialement à l'armature annulaire (1), à l'intérieur de la portion inférieure de cette armature, la paroi annulaire (3), évasée vers le bas, rentrant alors vers le haut à l'intérieur de la portion annulaire inférieure de la chambre de travail et ladite paroi annulaire (3) étant composée de deux portions (3₁, 3₂) adhérées radialement de part et d'autre d'une même armature annulaire intermédiaire rigide (13), et le dispositif comportant en outre un piston (14) qui plonge radialement dans la chambre de travail (A) et qui est couplé axialement à la tige de suspension (2), **caractérisé en ce que** l'armature intermédiaire est prolongée extérieurement par un anneau (14) d'axe Z qui constitue le piston, celle (3₁) des deux portions de la paroi annulaire (3), qui est comprise entre la tête (2₁) de la tige (2) et l'armature intermédiaire (13), portion dite "première portion" ci après, étant évidée de part et d'autre de la tête (2₁) de la tige de suspension (2) selon au moins une direction radiale (X) ladite première portion (3₁) présentant une grande rigidité axiale et une faible rigidité selon au moins ladite direction radiale (X) pour découpler le piston (14) par rapport à la tige de suspension (2) selon au moins ladite direction radiale (X) tout en maintenant le piston couplé à la tige de suspension dans la direction axiale (Z).

2. Dispositif antivibratoire hydraulique selon la revendication 1, caractérisé en ce que la première portion (3₁) de la paroi annulaire en élastomère (3) est évidée par des alvéoles (15, 16) diamétralement opposés selon la direction radiale considérée (X).

3. Dispositif antivibratoire hydraulique selon l'une quelconque des précédentes revendications, caractérisé en ce que l'armature intermédiaire (13) se présente sous la forme d'une coupelle métallique sans fond.

4. Dispositif antivibratoire hydraulique selon la revendication 3, caractérisé en ce que le grand bord supérieur de la coupelle métallique (13) est prolongé par des pattes (13₁) et en ce que l'anneau (14) comprend une rondelle (17) dont le bord intérieur est évidé par des encoches (17₁) recevant les racines des pattes de la coupelle, pattes qui sont rabattues radialement sur ladite rondelle.

5. Dispositif antivibratoire hydraulique selon la revendication 4, caractérisé en ce que la périphérie de la rondelle (17) est revêtue par un bourrelet annulaire en matériau élastomère (18).

## Claims

1. Hydraulic anti-vibration device designed to be interposed between two rigid elements and having:
- a rigid annular frame (1) with a vertical or substantially vertical axis Z and a rigid stud (2₁) coaxial with this frame, these being able to be fixed respectively to the two rigid elements,
- an annular elastomer wall (3) with axis Z, resistant to axial compression, interposed between the frame and the stud,
- a flexible impervious membrane (4) carried by the frame and defining an enclosed space with the latter, the stud and the annular wall,
- intermediate partition (5) comprising at least one rigid annular portion and carried by the frame and dividing the inside of the enclosed space into two chambers, one a working chamber (A) on the wall side, referred to as the lower side, and the other a surge chamber (B),
- a constricted passage (6) permanently connecting the two chambers to each other,
- and a mass of liquid filling the two chambers and the constricted passage,
- the stud (2₁) partly delimiting the inside of the working chamber (A) and forming the head of a suspension rod (2) which is itself disposed coaxially with the annular frame (1), inside the lower portion of this frame, the annular wall (3), which widens out towards the bottom, then tapering towards the top inside the lower annular portion of the working chamber and said annular wall (3) being composed of two portions (3₁,3₂) bonded radially on each side of the same rigid intermediate annular frame (13), and the device further comprising a piston (14) which plunges radially in the working chamber (A) and which is axially coupled to the suspension rod (2), characterised in that the intermediate frame is extended on the outside by a ring (14) with axis Z which constitutes the piston, one of the two portions of the annular wall (3), the one (3₁) which is contained between the head (2₁) of the rod (2) and the intermediate frame (13), referred to hereinafter as the "first portion", being hollowed out on both sides of the head (2₁) of the suspension rod (2) in at least one radial dimension (X), said first portion (3₁) having high axial rigidity and low rigidity in at least said radial direction (X) for uncoupling the piston (14) from the suspension rod (2) in at least said radial direction (X) while keeping the piston coupled to the suspension rod in the axial direction (Z).

2. Hydraulic anti-vibration device according to claim 1, characterised in that the first portion (3₁) of the annular elastomer wall (3) contains cavities (15, 16) which are diametrically opposed in the radial direction in question (X).

3. Hydraulic anti-vibration device according to any one of the preceding claims, characterised in that the intermediate frame (13) is in the form of a metal dish without a base.

4. Hydraulic anti-vibration device according to Claim 3, characterised in that the large top edge of the metal dish (13) is extended by lugs (13₁) and in that the ring (14) comprises a washer (17), the inner edge of which has notches (17₁) receiving the roots of the lugs of the dish, the said lugs being turned down radially over the said washer.

5. Hydraulic anti-vibration device according to Claim 4, characterised in that the periphery of the washer (17) has an annular flange made of elastomer (18).

## Patentansprüche

1. Hydraulische Antischwingungsvorrichtung, die für den Einbau zwischen zwei starren Elementen vorgesehen ist und aus folgenden Teilen besteht:
- einer starren ringförmigen Armatur (1) mit der Achse Z, die senkrecht oder im wesentlichen senkrecht verläuft, und einem zu dieser Armatur koaxial angeordneten starren Fußstück (2₁), die an dem einen bzw. anderen der beiden starren Elemente befestigbar sind,
- einer ringförmigen Wandung (3) mit der Achse Z aus elastomerem Material, die gegenüber der Druckbelastung in axialer Richtung widerstandsfähig und zwischen der Armatur und dem Fußstück eingebaut ist,
- einer flexiblen und dichten Membran (4), die durch die Armatur gehalten wird und mit dieser, dem Fußstück und der ringförmigen Wandung einen Raum begrenzt,
- einer dazwischenliegenden Trennwand (5) mit wenigstens einem starren ringförmigen Abschnitt, die von der Armatur gehalten wird und das Innere des Raumes in zwei Kammern, eine Arbeitskammer (A) auf der untere Seite genannten Seite der ringförmigen Wandung (3) und eine Kompensationskammer (B) unterteilt,
- einem verengten Durchgang (6), der die beiden Kammern dauernd miteinander verbindet
- und einer flüssigen Masse, die die beiden Kammern und den verengten Durchgang ausfüllt,
- wobei das Fußstück (2₁) teilweise den Innenraum der Arbeitskammer (A) begrenzt und das Kopfstück einer Aufhängungsstange (2) bildet, die ihrerseits koaxial zu der ringförmigen Armatur (1) im Inneren des unteren Abschnittes dieser Armatur angeordnet ist, die nach unten aufgeweitete ringförmige Wandung (3) nach oben in das Innere des unteren ringförmigen Abschnittes der Arbeitskammer eingezogen ist, und die ringförmige Wandung (3) aus zwei Abschnitten (3₁, 3₂) besteht, die radial auf beiden Seiten derselben ringförmigen, dazwischenliegenden starren Armatur (13) angebracht sind, und wobei die Vorrichtung außerdem einen Kolben (14) aufweist, der radial in die Arbeitskammer (A) eintaucht und axial mit der Aufhängungsstange (2) verbunden ist, dadurch gekennzeichnet, daß die dazwischenliegende Armatur nach außen durch einen Ring (14) mit der Achse Z, die den Kolben bildet, verlängert ist, wobei der Abschnitt (3₁) dieser beiden Abschnitte der ringförmigen Wand (3), der zwischen dem Kopfstück (2₁) der Stange (2) und der dazwischenliegenden Armatur (13) liegt - nachstehend erster Abschnitt genannt - auf beiden Seiten des Kopfstücks (2₁) der Aufhängungsstange (2) in wenigstens eine radiale Richtung (X) ausgehöhlt ist und der erste Abschnitt (3₁) eine große Steifigkeit in axialer Richtung und eine geringe Steifigkeit in wenigstens der radialen Richtung X aufweist, um den Kolben (14) in Bezug auf die Aufhängungsstange (2) wenigstens in radialer Richtung (X) unter Beibehaltung der Kupplung an die Aufhängung in axialer Richtung (Z) zu entkuppeln.

2. Hydraulische Antischwingungsvorrichtung nach Anspruch 1, dadurch gekennzeichnet, daß in dem ersten Abschnitt (3₁) der ringförmigen Wandung (3) aus elastomerem Material Hohlräume (15, 16) ausgenommen sind, die sich in der betrachteten radialen Richtung X diametral gegenüberliegen.

3. Hydraulische Antischwingungsvorrichtung nach einem der vorhergehenden Ansprüche, dadurch gekennzeichnet, daß die dazwischenliegende Armatur (13) die Form einer metallischen Schale ohne Boden hat.

4. Hydraulische Antischwingungsvorrichtung nach Anspruch 3, dadurch gekennzeichnet, daß der große Rand der metallischen Schale (13) durch Krempen (13₁) verlängert ist und daß der Ring (14) eine Scheibe (17) enthält, deren Innenrand mit Einschnitten (17₁) versehen ist, die die Wurzeln der radial über die Scheibe umgebogenen Krempen der Schale aufnehmen.

5. Hydraulische Antischwingungsvorrichtung nach Anspruch 4, dadurch gekennzeichnet, daß der Umfang der Scheibe (17) mit einem ringförmigen Wulst aus elastomerem Material (14) bedeckt ist.
